(19) Europäisches Patentamt
European Patent Office
Office européen des brevets

(11) **EP 2 875 386 B1**

(12) **FASCICULE DE BREVET EUROPEEN**

(45) Date de publication et mention
de la délivrance du brevet:
**03.04.2019 Bulletin 2019/14**

(21) Numéro de dépôt: **13739687.5**

(22) Date de dépôt: **19.07.2013**

(51) Int Cl.:
*G01T 1/169* (2006.01)   *G01T 7/00* (2006.01)

(86) Numéro de dépôt international:
**PCT/EP2013/065266**

(87) Numéro de publication internationale:
**WO 2014/013047 (23.01.2014 Gazette 2014/04)**

(54) **PROCEDE DE MESURE DE L'ACTIVITE D'UNE SOURCE D'EMISSION DE PHOTONS**

VERFAHREN ZUR MESSUNG DER AKTIVITAET EINER PHOTONEMISSIONSQUELLE

METHOD OF MEASURING THE ACTIVITY OF A PHOTON EMISSION SOURCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.07.2012 FR 1257004**

(43) Date de publication de la demande:
**27.05.2015 Bulletin 2015/22**

(73) Titulaire: **Institut de Radioprotection et de Sûreté
Nucléaire
92260 Fontenay aux Roses (FR)**

(72) Inventeurs:
• **PANZA, Fabien
F-75012 Paris (FR)**
• **GURRIARAN, Rodolfo
F-91140 Villebon sur Yvette (FR)**

(74) Mandataire: **Regimbeau
20, rue de Chazelles
75847 Paris Cedex 17 (FR)**

(56) Documents cités:
WO-A1-2005/116691   US-A- 5 442 180
US-A1- 2003 111 612   US-B1- 6 518 579
US-B1- 7 863 567

• F. GERING, U. HILLMANN, P. JACOB, G. FEHRENBACHER: "In situ gamma-spectrometry several years after deposition of rediocesium", RADIATION ENVIRONMENT BIOPHYSICS, vol. 37, 30 septembre 1998 (1998-09-30), pages 283-291, XP002695360, Springer Verlag
• WEIYI WANG ET AL: "Maximum-Likelihood Deconvolution in the Spatial and Spatial-Energy Domain for Events With Any Number of Interactions", IEEE TRANSACTIONS ON NUCLEAR SCIENCE., vol. 59, no. 2, 1 April 2012 (2012-04-01), pages 469-478, XP55459723, US ISSN: 0018-9499, DOI: 10.1109/TNS.2012.2183384

## Description

### DOMAINE DE L'INVENTION

L'invention concerne le domaine de l'acquisition et du traitement de données spectrométriques, pour la détermination des caractéristiques d'une source de rayonnements électromagnétiques de type gamma et de toute nature (minerai, pollution, sources scellées) d'un site donné.

La caractérisation de cette source comprend la localisation et la quantification de l'activité de la source de rayonnements.

### ETAT DE LA TECHNIQUE

Il existe plusieurs types de contaminations d'un site, tels qu'un dépôt surfacique d'éléments polluants, des fuites liées à la circulation d'un fluide contaminé, ou encore la présence d'une source de rayonnements électromagnétiques enterrée.

Les rayonnements eux-mêmes peuvent être variables. Il peut s'agir de rayons gamma, dans le cas d'une source radioactive, de rayons X ou infrarouge.

Les types de contamination correspondent à des profils d'émissions de rayonnements dans le sol et à des procédures de décontamination différentes.

Les campagnes de mesures réalisées sur un site contaminé ont pour objet de déterminer, connaissant le type de contamination, la localisation et le volume de la source de rayonnements, pour déterminer son taux d'émission de photons (ou activité dans le cas d'une source radioactive).

Or, de telles campagnes ne donnent généralement accès qu'à l'activité radioactive en surface du site. Pour déduire les informations recherchées sur la contamination à partir de cette activité surfacique, on a recours à des modèles de profils d'activité et à des hypothèses sur le type de sol.

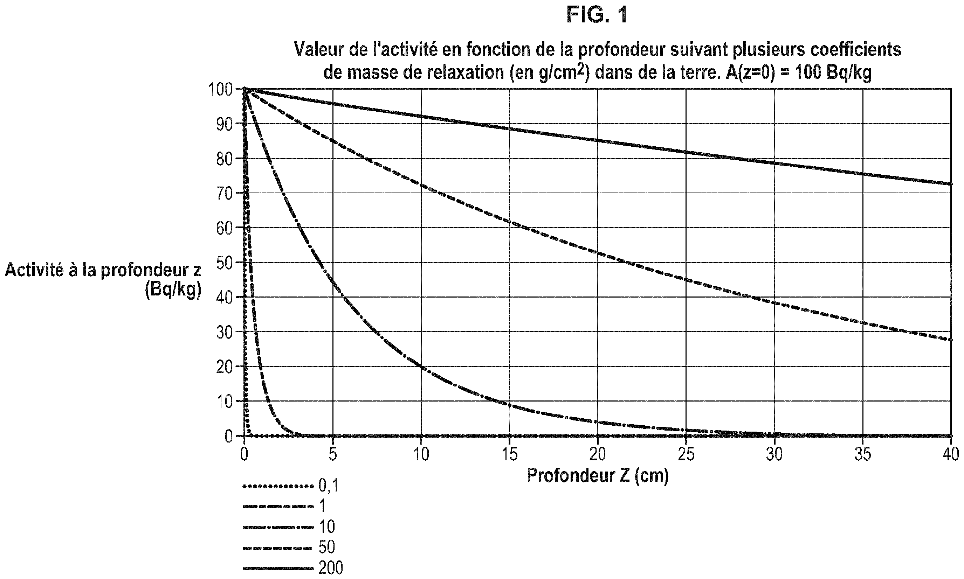

Par exemple, en référence à la figure 1, on a représenté la courbe de l'activité d'un élément radioactif en fonction de la profondeur à un temps donné, lorsque la présence de l'élément radioactif provient d'un dépôt en surface.

L'activité A en fonction de la profondeur z peut être une fonction exponentielle dont l'expression est donnée comme suit :

$$A(z) = A_0 e^{-\left(\frac{\rho}{\beta}\right)z}$$

Où $A_0$ est l'activité massique en surface, $\rho$ est la masse volumique du sol en $kg.m^{-3}$, et $\beta$ est le coefficient de masse de relaxation, en $kg.m^{-2}$. Ce dernier coefficient caractérise la distribution en profondeur de la source radioactive dans le sol.

Pour retrouver l'activité totale présente dans le sol, on mesure le taux de comptage sur une plage d'énergie donnée du spectre énergétique, et on choisit des hypothèses sur la constitution du sol, i.e. on modélise le sol et on lui confère une densité $\rho$, et on émet une hypothèse sur la valeur de $\beta$, pour en déduire le profil de l'activité en profondeur.

On multiplie ensuite ce taux de comptage mesuré par l'inverse de la fonction de réponse du détecteur pour obtenir la valeur totale de l'activité, qui correspond à l'activité déposée initialement à la surface du sol. Cette fonction de réponse est calculée de manière classique à partir de la connaissance de la distribution de la radioactivité dans le sol.

Cependant, cette méthode de calcul de l'activité du sol nécessite de partir de l'hypothèse d'une contamination du sol homogène, c'est-à-dire d'une source d'émission de photons s'étendant sur une surface très importante par rapport au détecteur. Cette hypothèse est erronée dans les cas où la source est ponctuelle. Cette méthode est également assez imprécise car elle est basée sur une hypothèse concernant la valeur de $\beta$, qui se révèle parfois erronée ou du moins imprécise. Par cette méthode il existe donc une imprécision systématique sur la valeur de l'activité totale présente dans le sol.

En outre, si la contamination n'est pas homogène ou que le détecteur se retrouve à l'aplomb d'une frontière entre une zone saine et contaminée, cette imprécision est accrue par la mesure de l'activité surfacique elle-même. En effet, les détecteurs captent tous les rayonnements gamma environnant, et pas seulement ceux qui proviennent verticalement du sous-sol sur les sites de mesure.

Il en résulte que les photons peuvent provenir de zones où les paramètres du sol sont différents du site mesuré à l'aplomb, et donc que l'activité totale déterminée soit fausse car la mesure de l'activité en surface du site est une combinaison de plusieurs distributions.

US2003111612 divulgue un procédé d'étude et un système de détection d'une source d'émission de photons en un site. Le document divulgue de mesurer des données spectrométriques, déplacer le détecteur pour mesurer et mémoriser ces données et à partir d'une fonction de réponse prédéterminée, obtenir des informations spectrométriques de surface affinées.

US6518579 décrit différentes méthodes pour la détermination in-situ des distributions de Cs-137 dans le sol. Le document divulgue la détermination non-destructive de la profondeur des isotopes émettant des rayonnements gamma directs ou indirects dans un milieu par spectroscopie gamma.

L'art antérieur publié: Maximum-Likelihood Deconvolution in the Spatial and Spatial-Energy Domain for Events with any number of interactions. Weiyi Wang et al., IEEE Transactions on Nuclear Science, Vol.59, No.2, April 2012 divulgue l'utilisation d'une fonction d'étalement du point du détecteur et la déconvolution des données obtenues dans le domaine spatial et le domaine énergetique prenant compte des effets du continuum de Compton.

PRESENTATION DE L'INVENTION

L'invention a pour but de pallier les problèmes précités. En particulier, un des buts de l'invention est de proposer un procédé pour déterminer les contours d'une source de rayonnements en un site, afin de quantifier l'activité de ladite source avec une précision accrue.

Un autre but de l'invention est de proposer un procédé permettant en outre de déterminer la répartition en profondeur de la source.

A cet égard, l'invention propose un procédé d'étude d'une source d'émission de photons en un site, selon la revendication 1.

Avantageusement, mais facultativement, l'invention peut en outre comprendre au moins l'une des caractéristiques tels que revendiqués dans les revendications dépendantes.

L'invention concerne également un système de détection d'activité radioactive selon la revendication 7.

L'utilisation d'une méthode de déconvolution des mesures spectrométriques par la fonction de réponse du détecteur qui se calcule avec une méthode de détermination d'un profil d'activité radioactive en profondeur, permet de retrouver les contours d'une source de rayonnements et d'en déduire son activité.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1, déjà décrite, représente un profil d'activité radioactive en profondeur après le dépôt d'une contamination radioactive en surface.

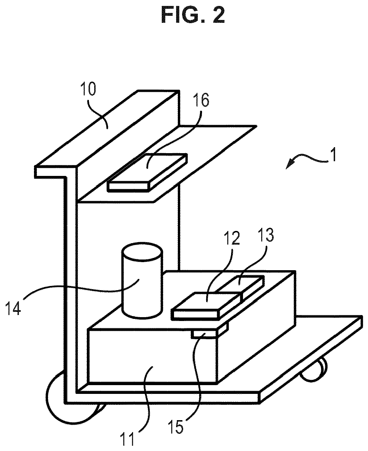

- La figure 2 représente schématiquement un système utilisé dans la mise en oeuvre du procédé selon l'invention.
- Les figures 3a et 3b représentent les principales étapes du procédé selon l'invention.
- La figure 4 illustre un spectre partiel d'émission de photons.
- La figure 5a représente la relation entre le rapport « Peak to Valley » et le coefficient de masse de relaxation dans le cas d'une source de photons à distribution exponentielle dans le sol et mesuré par un spectromètre semiconducteur au germanium,
- La figure 5b représente la relation entre le rapport « Peak to Valley » et la profondeur d'une source de photons ponctuelle dans le sol.
- Les figures 6a, 6b et 6c représentent un exemple de mise en oeuvre d'étape de déconvolution de données sur un site.

DESCRIPTION DETAILLEE D'AU MOINS UN MODE DE MISE EN OEUVRE

*Système de détection*

Au cours du procédé selon l'invention, un opérateur déplace un système de détection dans un site où se trouve supposément au moins une source de photons.

En référence à la figure 1, un tel système 1 de détection comprend un chariot mobile 10, sur lequel est monté un détecteur 11 de rayonnement. Le détecteur est adapté au type de rayonnement étudié ; par exemple, dans le cas de la localisation d'une source radioactive, le détecteur est avantageusement un détecteur au germanium car il présente une résolution très fine, de l'ordre de 0,25% à l'énergie photonique de *600 keV.*

Dans le cas d'un détecteur au germanium, il est avantageux de munir également le système d'un système de refroidissement 14, par exemple un réservoir d'azote liquide, permettant un refroidissement du détecteur.

Ce détecteur n'est pas collimaté, de sorte qu'il peut détecter des photons provenant du sol avec une ouverture de détection de 180°, correspondant à un angle solide de $2\pi$ stéradians.

Le système comprend en outre une unité de calcul et de traitement 12, et une mémoire 13 connectée à ladite unité. Le détecteur est pourvu d'une interface 15 lui permettant de transmettre des données à l'unité de calcul et de traitement.

Le système peut en outre comprendre un dispositif de positionnement 16, par exemple un système de géopositionnement par satellite (GPS), connecté à l'unité de calcul et de traitement, pour associer aux données spectrométriques acquises en un point de mesure les coordonnées géographiques dudit point.

*Procédé d'étude d'une source de rayonnements*

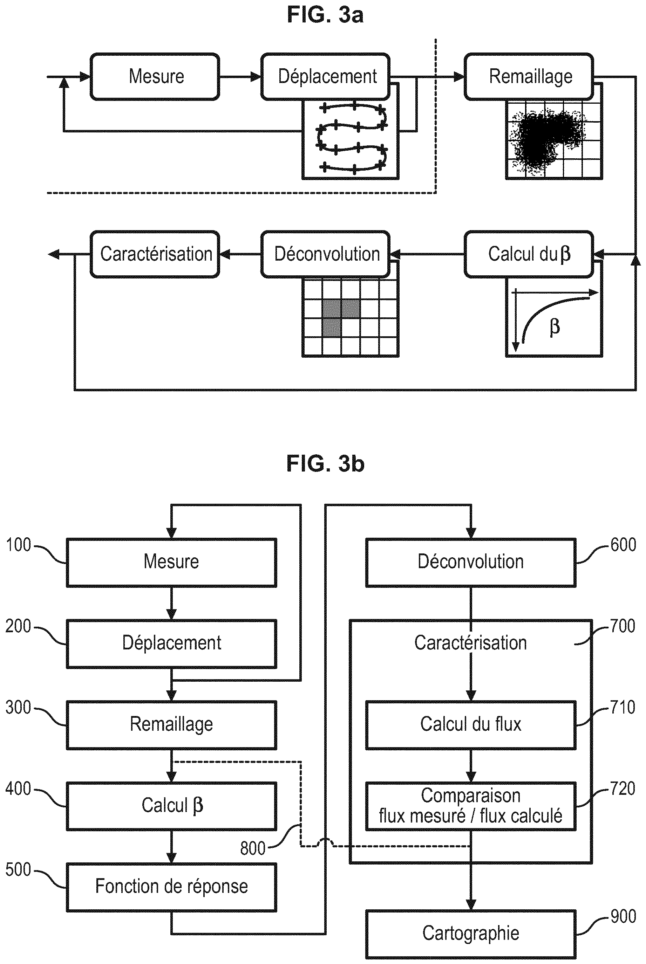

En référence aux figures 3a et 3b, on a représenté les principales étapes du procédé selon l'invention.

*Acquisition des données*

Ce procédé comprend une partie d'acquisition 100 de mesures sur un site dans lequel peut se trouver une source S d'émission de photons.

Au cours de cette étape de mesure, un opérateur place un système 1 en un point de mesure du site, et procède à l'acquisition 100 de données spectrométriques explicitées ci-après, ainsi que des coordonnées géographiques des points de mesures.

Chaque mesure de données spectrométriques est enregistrée par la mémoire 13. Après chaque étape de mesure 100, l'opérateur déplace le système 1 pour atteindre un nouveau point de mesure et réitérer l'étape 100 d'acquisition des données.

De préférence, les points de mesures sont régulièrement répartis en surface du site.

Les étapes de mesure et de déplacement constituent une première partie du procédé réalisée en temps réel. Une fois les données spectrométriques acquises pour l'ensemble des points de mesure du site considéré, une phase postérieure de retraitement des données est mise en oeuvre. Cette étape peut être mise en oeuvre par un serveur distinct du système 1 ou alternativement par l'unité de traitement 12.

*Remaillage des données*

Cette phase de retraitement des données comprend de préférence une étape 300 de remaillage des points de mesure. Cette étape consiste à générer, à partir d'une carte du site, un réseau de points régulièrement répartis sur le site, et à attribuer à chacun des points du réseau des données spectrométriques déterminées à partir des données spectrométriques mesurées au niveau des points de mesure.

Cette étape est réalisée par interpolation des données relevées aux points de mesure, pour obtenir des données spectrométriques correspondant aux coordonnées géographiques des points du réseau.

*Détermination d'un profil de la source en profondeur*

Puis, une étape 400 de détermination d'un profil de la source en profondeur est mise en oeuvre. Cette étape dépend de la nature de la distribution de la source en profondeur ; ponctuelle ou exponentielle.

Dans le cas d'une source de rayons gamma à distribution exponentielle, cette étape requiert la détermination d'un coefficient de masse de relaxation $\beta$. Ce coefficient peut être déterminé de différentes manières, soit en déterminant un coefficient hypothétique à partir d'une hypothèse sur la constitution du sol, soit en le calculant à partir des données spectrométriques en chaque point.

On va maintenant décrire une méthode de calcul d'un coefficient de masse de relaxation d'une source de rayons gamma présentant une distribution en profondeur exponentielle.

Si cette étape est précédée d'une étape de remaillage, le calcul est réalisé sur les données spectrométriques des points du réseau. Alternativement, si l'étape n'est pas précédée d'un remaillage, le calcul est réalisé sur les données spectrométriques acquises en chaque point de mesure.

Dans tous les cas, le calcul du coefficient de masse de relaxation comprend le calcul d'un ratio, pour chaque point de mesure, entre le nombre de photons gamma direct détectés et le nombre de photons gamma ayant subi une diffusion Compton détectés.

A cet égard, les données spectrométriques de chaque point utilisé comprennent des taux de comptage de photons gamma, en coups par seconde, dans différentes bandes d'énergie.

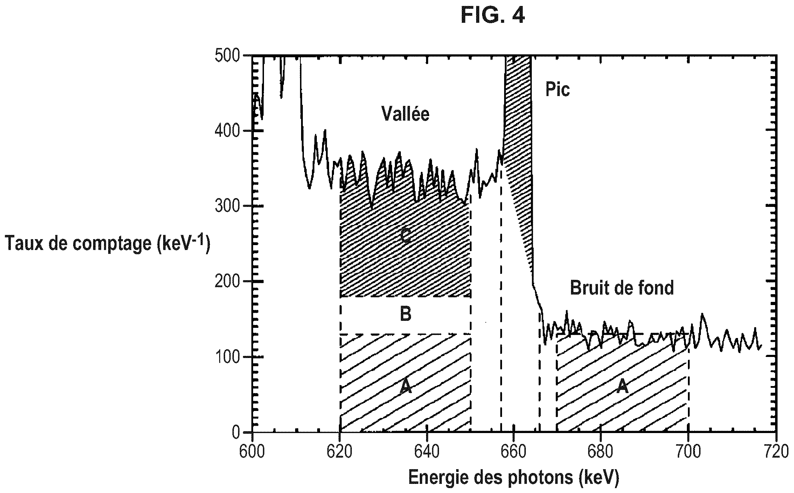

En référence à la figure 4, on a représenté une partie du spectre d'émission de photon d'une espèce atomique. Ce spectre comprend un pic d'énergie, correspondant à des photons émis par une source radioactive, et parvenant sur le détecteur sans avoir subi de diffusion. Ils sont appelés « photons directs ». La zone d'énergie plus importante à droite du pic ne comprend qu'un bruit de fond au niveau de la mesure provenant de la radioactivité naturelle des rayonnements de plus hautes énergies (ce bruit de fond est considéré constant sur la plage en énergie étudiée).

La zone d'énergie à gauche du pic comprend quant à elle des photons de moindre énergie, qui sont détectés après avoir subi une diffusion Compton et avoir perdu une partie de l'énergie à laquelle ils sont émis.

Cette zone comprend plus spécifiquement une zone A qui correspond au bruit de fond à droite du pic, une zone B qui est un bruit de fond additionnel produit par le fond Compton hétérogène des photons de plus haute énergie, et une zone C qui correspond aux photons ayant subi une diffusion Compton dans le sol à faible angle de diffusion, entrainant ainsi une faible perte d'énergie.

Les données spectrométriques acquises en chaque point de mesure comprennent un taux de comptage des photons dans une première bande d'énergie au niveau du pic d'énergie, ainsi que le taux de comptage des photons ayant subi une diffusion Compton, correspondant à une deuxième bande d'énergie.

La détermination de l'aire de la zone C est effectuée en soustrayant l'aire de la zone A du bruit de fond et de la zone B. Puis, grâce aux taux de comptage, on peut calculer le ratio entre l'aire nette du pic et l'aire de la zone C.

Pour plus de précisions sur le calcul mis en oeuvre pour déterminer ce ratio, on peut se référer à la publication GERING F. et al. (1998), « In situ gamma spectrometry several years after deposition of radiocesium. II. Peak to valleay method ». Radia. EnvironBiophys 37 :283-291.

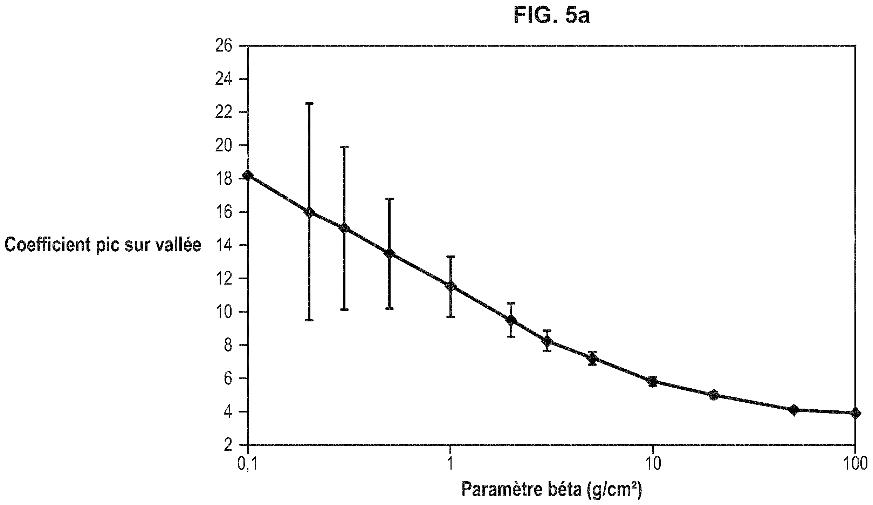

Ce ratio, appelé « Peak to Valley », correspond au ratio entre le nombre de photons direct et le nombre de photons diffusés, et, comme visible en figure 5a, il est lié à la distribution en profondeur de la source.

On a représenté en figure 5a la relation entre un ratio « Peak to Valley » et la valeur du coefficient de masse de relaxation $\beta$ dans le cas d'une distribution exponentielle d'une source de rayons gamma. Cette abaque a été réalisée à partir de simulations numériques et permet de retrouver, à partir d'un ratio Peak-to-Valley, la valeur du coefficient de masse de relaxation correspondant.

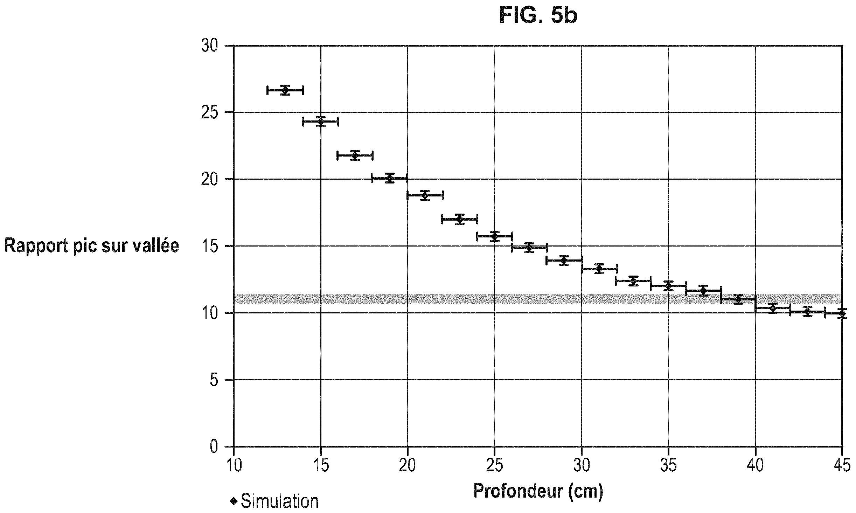

En référence à la figure 5b, le ratio Peak-to-Valley est également exploité dans le cas d'une source ponctuelle d'émission de photons, puisqu'il permet d'obtenir la profondeur de la source. La figure 5b représente la relation entre le ratio Peak to Valley et la profondeur d'une source ponctuelle. Cette abaque a également été réalisée par simulation numérique, et permet d'obtenir la profondeur d'une source avec précision à partir de la valeur du ratio Peak to Valley.

### Détermination de la fonction de réponse du détecteur

Le coefficient de masse de relaxation obtenu indique donc la distribution des radionucléides dans le sol, et permet d'en déduire la fonction de réponse du détecteur au cours d'une étape 500 de façon connue de l'homme de l'art.

Cette fonction de réponse s'écrit

$$G = \frac{N_f}{A} = \frac{N_f}{N_0} \cdot \frac{N_0}{\Phi} \cdot \frac{\Phi}{A} \quad \text{où}$$

- $N_f$ correspond au taux de comptage de photons dans la bande d'énergie considérée, en coups/s, et A est l'activité surfacique ou volumique de la source en Becquerel par mètre carré ou par kilogramme, ou plus généralement le taux d'émission surfacique ou volumique de photons en coups/s.m² ou coups/s.kg.
- Le terme $\frac{\Phi}{A}$ correspond à la distribution angulaire du flux de photons, qui dépend uniquement de la distribution des radionucléides dans le sol, cette distribution étant obtenue par le coefficient de masse de relaxation déterminé ci-avant.
- Le terme $N_0/\Phi$ est la proportion de photons détectée par rapport au flux parvenant sur le détecteur dans une direction parallèle à l'axe du cristal de détection de celui-ci.
- Le terme $N_f/N_0$ traduit la variation du terme $N_0/\Phi$ en fonction de l'angle d'incidence du flux de photons par rapport à un flux incident axial.

L'activité en surface de la source est alors obtenue par les mesures du détecteur et par sa fonction de réponse, comme on va le voir dans la suite.

### Déconvolution des données

De retour à la figure 3a, cette étape de détermination de la fonction de réponse du détecteur est suivie d'une étape 600 de déconvolution des données spectrométriques. Cette étape est réalisée soit sur les données acquises au niveau des points de mesure, soit sur les données obtenues aux points du réseau généré au cours de l'étape de remaillage.

Les données spectrométriques N, c'est-à-dire le taux de comptage de photons sur tout le spectre d'énergie capté par le détecteur, peuvent s'exprimer comme suit :

$$N = G \otimes f$$

Où :

- $f$ est le signal (taux d'émission du sol) que l'on désire estimer ou restaurer, et
- G est la fonction de réponse du spectromètre sur tout le spectre de détection, ou réponse impulsionnelle, également nommée fonction d'étalement du point (en anglais Point Spread Function ou PSF). Elle correspond à la fonction de passage entre l'activité dans le sol d'un pixel et le taux de comptage enregistré, et a été calculée au cours de l'étape précédente 500 à partir de la connaissance de la distribution des radionucléides dans le sol et de l'étalonnage du détecteur.

On constate donc que les données relevées par le détecteur ne sont pas représentatives de l'activité exacte du site, mais sont déformées par la fonction de réponse du détecteur.

Dans le contexte de l'invention, la fonction de réponse G du spectromètre représente le nombre de photons enregistré qui est engendré par un pixel de 1m², en fonction de sa distance à la perpendiculaire du détecteur.

Le taux de comptage de photons dans le spectre de détection peut donc s'écrire en terme matriciel à partir de l'écriture de la fonction de réponse du détecteur comme suit :

$$N(x_i, y_i) = \left(\frac{N_f}{N_0} \cdot \frac{N_0}{\Phi} \cdot \frac{\Phi}{A}\right) \otimes A(x_j, y_j)$$

L'activité A($x_j$,$y_j$) au pixel S($X_j$; $Y_j$) produit un taux de comptage N au point $S_i$ ($X_j$; $Y_j$).

Pour procéder à l'étape de déconvolution et obtenir le signal réel f, c'est-à-dire l'activité A que l'on souhaite mesurer, on met en oeuvre l'algorithme itératif de Richardson-Lucy.

Le taux de comptage en chaque pixel i de la carte remaillée peut être représenté comme une convolution de la fonction de réponse G du spectromètre et de la carte du taux d'émission de rayonnement du sol (ou activité A) noté :

$$N_i = G_i \otimes A(j) = \sum_j g_{ij} A_j$$

Avec $N_i$ : taux de comptage au pixel i,
$g_{ij}$ : fonction de réponse du détecteur, appliquée à l'activité du pixel j pour obtenir un taux de comptage mesuré au pixel i, et
$A_j$ : activité du pixel j.

On utilise la méthode du « maximum de vraisemblance » des $A_j$ qui donnent les $N_i$ mesurés connaissant $g_{ij}$. On pose l'hypothèse que la statistique du taux d'émission du sol suit une distribution Poissonienne. Cela conduit à une équation qui peut être résolu de manière itérative en fonction de :

$$A_j^{(t+1)} = A_j^{(t)} \sum_i \frac{N_i}{C_i} g_{ij}$$

Où t est l'indice de l'itération sur le calcul de l'activité dans le pixel j, et

$$C_i = \sum_j g_{ij} A_j^{(t)}$$

Il est montré que si cette itération converge, elle converge vers la valeur de l'activité du pixel « j » provoquant la part du taux de comptage au pixel « i » correspondant réellement au pixel « j ».

Ainsi les données déconvoluées permettent d'obtenir directement l'activité de la source d'émission de photons en un pixel.

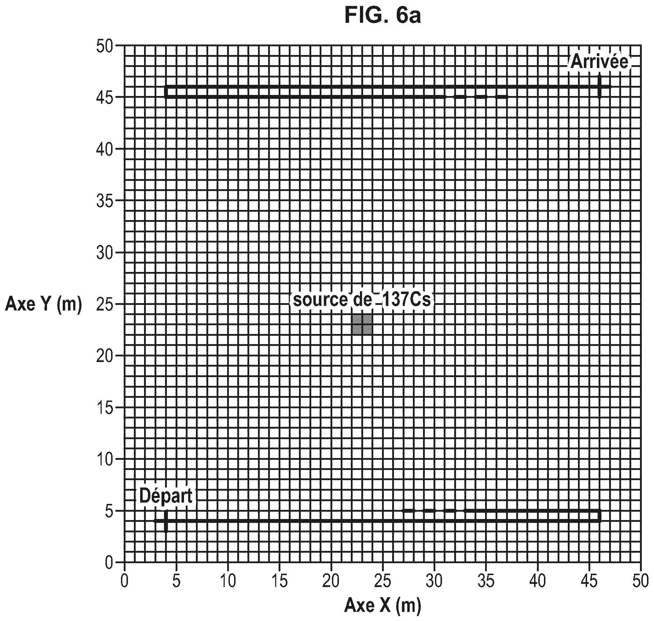

En référence aux figures 6a à 6c, on a représenté un exemple de mise en oeuvre de cette étape 600 de déconvolution. La figure 6a représente un site contaminé par une source radioactive au $^{137}$Cs et la campagne de mesure réalisée sur le site. On a représenté la source au centre du site, et le parcours du détecteur est illustré partiellement, au niveau du départ et de l'arrivée. Le déplacement du détecteur est réalisé avec un pas d'un mètre, qui est également la fréquence de l'acquisition des mesures, et la distance entre deux traversées selon l'axe X du site.

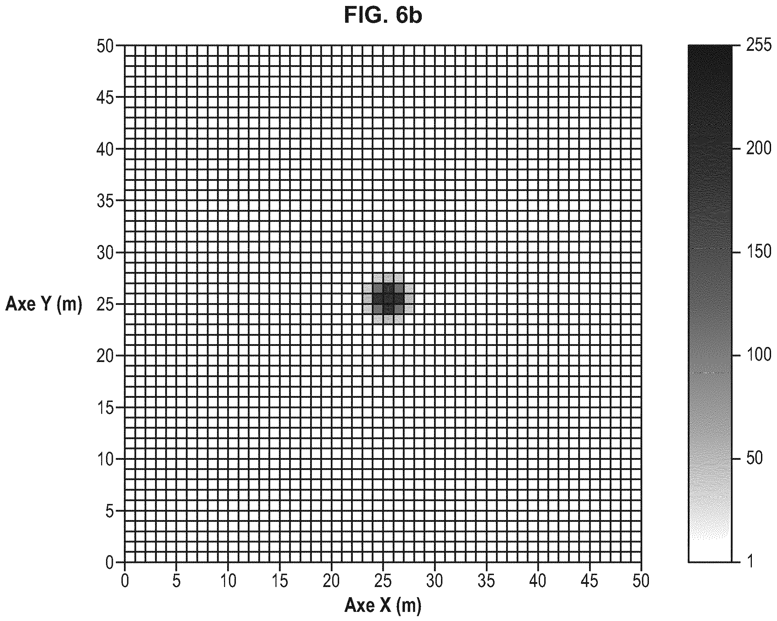

On a représenté en figure 6b les données recueillies par le détecteur. Le niveau de gris de chaque pixel représente le taux d'émission de photons mesuré sur celui-ci. Plus un pixel est foncé, et plus le taux d'émission de photons y est important.

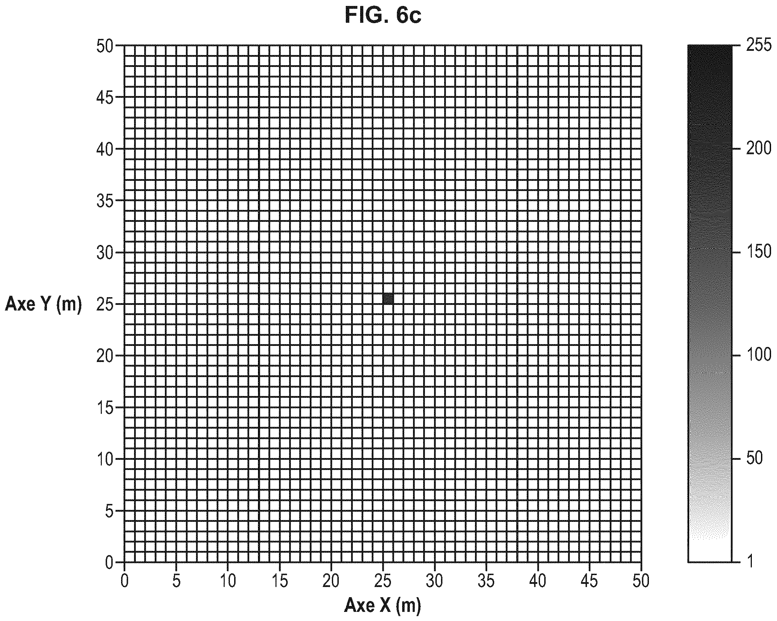

On remarque que le taux de comptage mesuré par le détecteur est plus étalé que la source effectivement présente sur le site. L'étape de déconvolution est mise en oeuvre sur ces données, pour obtenir l'activité représentée en figures 6c. On constate que les données déconvoluées correspondent mieux à la position et à la répartition exacte de la source.

*Caractérisation fine de la source*

A l'issue de l'étape de déconvolution, on obtient donc les zones précises du site au niveau desquelles est présente la source, ainsi que l'activité de la source en ces points.

On met en oeuvre ensuite une étape 700 de caractérisation fine de la source, qui comprend en premier lieu le calcul 710 du flux de photons émis en surface par la source, en fonction de son activité et de sa profondeur.

Le flux de photons calculé peut être comparé au flux de photons effectivement mesuré en surface sur le détecteur au cours d'une étape 720. Si on constate un écart, alors on peut réitérer (flèche 800) les étapes 400 à 600, en précisant le calcul ou l'estimation du coefficient de masse de relaxation et en précisant la surface sur laquelle s'étend la source déterminée par la déconvolution.

Ces étapes peuvent être itérées jusqu'à obtenir la convergence du flux mesuré et du flux calculé. Puis, on peut représenter au cours d'une étape 900 l'activité obtenue au terme de cette itération sur une carte du site, pour obtenir une cartographie exacte de la présence et de l'activité de la source.

**Revendications**

1. Procédé d'étude d'une source d'émission de photons en un site, le procédé comprenant les étapes consistant à :

   - mesurer (100) en un point en surface dudit site, des données spectrométriques, les rayonnements détectés étant des rayonnements gamma, les données spectrométriques comprenant un taux de comptage de photons dans une première bande d'énergie caractéristique d'une espèce atomique de la source, et un taux de comptage de photons dans une seconde bande d'énergie correspondant à des photons de ladite espèce atomique diffusés par diffusion Compton,
   et mesurer en outre des coordonnées géographiques du point de mesure, et mémoriser lesdites données en association avec lesdites coordonnées,
   - déplacer (200) le détecteur jusqu'à au moins un autre point du site et, en chaque point, réitérer l'étape de mesure et de mémorisation,
   - déterminer (400) un coefficient de masse de relaxation de ladite source en le site, à partir des données spectrométriques en chaque point de mesure, ladite détermination comprenant le calcul d'un rapport entre le taux de comptage des photons de la première bande d'énergie et le taux de comptage des photons de la seconde bande d'énergie, et
   - mettre en oeuvre, à partir d'une fonction de réponse prédéterminée du détecteur, ladite fonction étant la fonction d'étalement du point du détecteur

   déterminée à partir du coefficient de masse de relaxation,
   sur l'ensemble des données spectrométriques de surface mesurées, une étape de déconvolution (500), pour obtenir des informations spectrométriques de surface affinées,

les informations spectrométriques de surface affinées permettant la localisation géographique et l'évaluation du taux d'émission de photons de ladite source.

2. Procédé selon la revendication 1, comprenant en outre une étape de remaillage (300) des données spectrométriques mesurées, préalable à l'étape de déconvolution (500), au cours de laquelle on génère un réseau de points régulièrement répartis, et on détermine des données spectrométriques aux points du réseau en fonction des données spectrométriques acquises au niveau des points de mesure.

3. Procédé selon la revendication 2, comprenant en outre les étapes consistant à :

   - déduire du coefficient de masse de relaxation une distribution en profondeur dans le sol de ladite source, et
   - déterminer la fonction de réponse du détecteur en fonction de la distribution en profondeur de ladite source.

4. Procédé selon la revendication 3, dans lequel les informations spectrométriques de surface affinées comprennent l'activité de la source d'émission de photons en chaque point du site, ladite activité étant obtenue par déconvolution des données spectrométriques par la fonction de réponse du détecteur.

5. Procédé selon la revendication 4, comprenant en outre les étapes consistant à :

   - calculer (710), à partir de la carte de l'activité, un flux de photons en surface du site,
   - comparer (720) ledit flux à au moins un flux mesuré en surface du site, et
   - itérer les étapes de calcul (400) d'un coefficient de masse de relaxation et de déconvolution (500), pour obtenir une convergence entre le flux calculé et le flux mesuré.

6. Procédé selon la revendication 5, comprenant en outre une étape consistant à réaliser une cartographie (900) de l'activité de la source d'émission de photons sur le site.

7. Système (1) de détection d'activité radioactive adapté pour la mise en oeuvre du procédé selon l'une des revendications précédentes, le système comprenant :

   - un chariot mobile (10), adapté pour être déplacé dans un site,
   - un détecteur de rayonnement (11), monté sur ledit chariot, adapté pour mesurer en une pluralité de points de mesure des données spectrométriques, le détecteur étant configuré pour détecter des rayonnements gamma, les données spectrométriques comprenant un taux de comptage de photons dans une première bande d'énergie prédéterminée, et un taux de comptage de photons dans une seconde bande d'énergie prédéterminée correspondant à des photons diffusés par diffusion Compton,
   - une unité de calcul et de traitement (12), et
   - une mémoire (13) en communication avec l'unité de calcul et de traitement, le système étant **caractérisé en ce que** l'unité de traitement est adaptée pour :
   - charger des données de chaque point de mesure stockées dans la mémoire,
   - déterminer un coefficient de masse de relaxation d'une source à partir des données spectrométriques en chaque point de mesure,
   - à partir de la fonction d'étalement du point du détecteur, déterminée à partir du coefficient de masse de relaxation, mettre en oeuvre sur l'ensemble desdites données une étape de déconvolution, pour obtenir des informations spectrométriques de surface affinées, et
   - générer une cartographie d'une source d'émission de photons à l'origine des données spectrométriques présente dans ledit site.

8. Système de détection selon la revendication 7, dans lequel le dispositif de positionnement (13) est un système de positionnement par satellite (GPS).

9. Système de détection selon l'une des revendications 7 ou 8, dans lequel le détecteur est un détecteur au germanium, et le système de détection comprend en outre un système de refroidissement (14) comprenant un réservoir d'azote liquide.

**Patentansprüche**

1. Verfahren zur Untersuchung einer Photonenemissionsquelle an einem Standort, wobei das Verfahren die Schritte umfasst, die darin bestehen:

   - Messen (100), an einem Punkt an der Oberfläche des Standorts, der spektrometrischen Daten, wobei die ermittelten Strahlen Gammastrahlen sind, wobei die spektrometrischen Daten eine Photonenzählrate in einem ersten Energieband umfassen, das für eine atomare Spezies der Quelle charakteristisch ist, und eine Photonenzählrate in einem zweiten Energieband, entsprechend Photonen der durch Compton-Streuung gestreuten atomare Spezies, und Messen ferner der geografischen Koordinaten des Messpunkts, und Speichern der Daten in Verbindung mit den Koordinaten,

- Verlagern (200) des Detektors bis zu mindestens einem anderen Punkt des Standorts und, an jedem Punkt, Wiederholen des Mess- und Speicherschritts,
- Bestimmen (400) eines Massenrelaxationskoeffizienten der Quelle an dem Standort ausgehend von spektrometrischen Daten an jedem Messpunkt, wobei das Bestimmen das Berechnen eines Verhältnisses zwischen der Photonenzählrate des ersten Energiebands und der Photonenzählrate des zweiten Energiebands umfasst, und
- Durchführen, ausgehend von einer vorher festgelegten Antwortfunktion des Detektors, wobei die Funktion die Ausbreitungsfunktion des Punkts des Detektors ist, bestimmt ausgehend vom Massenrelaxationskoeffizienten, für alle gemessenen spektrometrischen Oberflächendaten, eines Entfaltungsschritts (500), um verfeinerte spektrometrische Oberflächeninformationen zu erhalten, wobei die verfeinerten spektrometrischen Oberflächeninformationen die geografische Lokalisierung und die Evaluierung der Photonenemissionsrate der Quelle erlauben.

2. Verfahren nach Anspruch 1, umfassend ferner einen Verknüpfungsschritt (300) der gemessenen spektrometrischen Daten vor dem Entfaltungsschritt (500), bei dem ein Netz gleichmäßig verteilter Punkte generiert wird und spektrometrische Daten an Punkten des Netzes in Abhängigkeit von den im Bereich der Messpunkte erfassten spektrometrischen Daten bestimmt werden.

3. Verfahren nach Anspruch 2, umfassend ferner die Schritte, die darin bestehen:

- Ableiten, aus dem Massenrelaxationskoeffizienten, einer Tiefenverteilung der Quelle im Boden, und
- Bestimmen der Antwortfunktion des Detektors in Abhängigkeit von der Tiefenverteilung der Quelle.

4. Verfahren nach Anspruch 3, wobei die verfeinerten spektrometrischen Oberflächeninformationen die Aktivität der Photonenemissionsquelle an jedem Punkt des Standorts umfassen, wobei die Aktivität durch Entfaltung der spektrometrischen Daten durch die Antwortfunktion des Detektors erhalten wird.

5. Verfahren nach Anspruch 4, umfassend ferner die Schritte, die darin bestehen:

- Berechnen (710), aus der Karte der Aktivität, eines Photonenstroms an der Oberfläche des Standorts,

- Vergleichen (720) des Stroms mit mindestens einem an der Oberfläche des Standorts gemessenen Stroms, und
- Wiederholen des Berechnungsschritts (400) eines Massenrelaxationskoeffizienten und des Entfaltungsschritts (500), um eine Konvergenz zwischen dem berechneten Strom und dem gemessenen Strom zu erhalten.

6. Verfahren nach Anspruch 5, umfassend ferner einen Schritt, der darin besteht, eine Kartografie (900) der Aktivität der Photonenemissionsquelle am Standort durchzuführen.

7. Detektionssystem (1) radioaktiver Aktivität, das für die Durchführung des Verfahrens nach einem der vorangehenden Ansprüche geeignet ist, wobei das System umfasst:

- einen beweglichen Schlitten (10), der für die Verlagerung an einem Standort geeignet ist,
- einen Strahlendetektor (11), der auf dem Schlitten angebracht ist, der für die Messung der spektrometrischen Daten an einer Vielzahl von Messpunkten geeignet ist, wobei der Detektor konfiguriert ist, um Gammastrahlen zu ermitteln, wobei die spektrometrischen Daten eine Photonenzählrate in einem ersten vorher festgelegten Energieband und eine Photonenzählrate in einem zweiten vorher festgelegten Energieband umfassen, entsprechend durch Compton-Streuung gestreuten Photonen,
- eine Berechnungs- und Verarbeitungseinheit (12), und
- einen Speicher (13) in Kommunikation mit der Berechnungs- und Verarbeitungseinheit, wobei das System **dadurch gekennzeichnet ist, dass** die Verarbeitungseinheit geeignet ist, um:
- Daten jedes Messpunkts zu laden, die im Speicher gespeichert sind,
- ausgehend von spektrometrischen Daten an jedem Messpunkt, einen Massenrelaxationskoeffizienten einer Quelle zu bestimmen
- ausgehend von der ausgehend vom Massenrelaxationskoeffizienten bestimmten Ausbreitungsfunktion des Punkts des Detektors für alle Daten einen Entfaltungsschritt durchzuführen, um verfeinerte spektrometrische Oberflächeninformationen zu erhalten, und
- eine Kartografie einer Photonenemissionsquelle als am Standort vorhandener Ursprung der spektrometrischen Daten zu generieren.

8. Detektionssystem nach Anspruch 7, wobei die Positionierungsvorrichtung ein Positionierungssystem durch Satelliten (GPS) ist.

9. Detektionssystem nach einem der Ansprüche 7 oder 8, wobei der Detektor ein Germaniumdetektor ist und das Detektionssystem ferner ein Kühlsystem (14) umfasst, das einen Vorratsbehälter für flüssigen Stickstoff umfasst.

**Claims**

1. A method for studying a photon emission source at a site, the method comprising the steps of:

   - measuring (100) at a point on the surface of said site, spectrometric data, the detected radiation being gamma radiation, the spectrometric data comprising a photon count rate in a first energy band characteristic of an atomic species of the source, and a photon count rate in a second energy band corresponding to photons of said atomic species scattered by Compton scattering,
   and further measuring geographic coordinates of the measuring point, and storing said data in association with said coordinates,
   - moving (200) the detector up to at least another point of the site and, at each point, repeating the measurement and storage step,
   - determining (400) a relaxation mass coefficient of said source at the site, from the spectrometric data at each measuring point, said determination comprising the calculation of a ratio between the photon count rate of the first energy band and the photon count rate of the second energy band, and
   - implementing, from a predetermined response function of the detector, said function being the point spread function of the detector determined from the relaxation mass coefficient, on all of the measured surface spectrometric data, a deconvolution step (500), in order to obtain refined surface spectrometric information,
   the refined surface spectrometric information enabling the geographic location and the evaluation of the photon emission rate of said source.

2. The method according to claim 1, further comprising a remeshing step (300) of measured spectrometric data, prior to the deconvolution step (500), during which a network of evenly distributed points is generated, and spectrometric data are determined at the points of the network based on the acquired spectrometric data at the measuring points.

3. The method according to claim 2, further comprising the steps of:

   - deducing, from the relaxation mass coefficient, a depth distribution of said source in the soil, and
   - determining the response function of the detector based on the depth distribution of said source.

4. The method according to claim 3, wherein the refined surface spectrometric information comprise the activity of the photon emission source at each point of the site, said activity being obtained by deconvolution of the spectrometric data by the response function of the detector.

5. The method according to claim 4, further comprising the steps of:

   - calculating (710), from the map of the activity, a photon flux on the surface of the site,
   - comparing (720) said flux with at least one flux measured on the surface of the site, and
   - repeating the relaxation mass coefficient calculation step (400) and the deconvolution step (500), in order to obtain a convergence between the calculated flux and the measured flux.

6. The method according to claim 5, further comprising a step of performing a mapping (900) of the activity of the photon emission source on the site.

7. A system (1) for detecting radioactive activity, adapted to implement the method according to any one of the preceding claims, the system comprising:

   - a movable carriage (10), adapted to be moved in a site,
   - a radiation detector (11) mounted on said carriage and adapted to measure spectrometric data at a plurality of measuring points, the detector being configured to detect gamma radiation, the spectrometric data comprising a photon count rate in a first predetermined energy band, and a photon count rate in a second predetermined energy band corresponding to photons scattered by Compton scattering,
   - a calculation and processing unit (12), and
   - a memory (13) in communication with the calculation and processing unit, the system being **characterized in that** the processing unit is adapted to:
   - load data of each measuring point which are stored in the memory,
   - determine a relaxation mass coefficient of a source from the spectrometric data at each measuring point,
   - from the point spread function of the detector, determined from the relaxation mass coefficient, implement on all said data a deconvolution step, in order to obtain refined surface spectrometric information, and

- generate a mapping of a photon emission source at the origin of spectrometric data, present in said site.

8. The detection system according to claim 7, wherein the positioning device is a global positioning system (GPS).

9. The detection system according to any one of claims 7 or 8, wherein the detector is a germanium detector, and the detection system further comprises a cooling system (14) comprising a liquid nitrogen reservoir.

FIG. 1

Valeur de l'activité en fonction de la profondeur suivant plusieurs coefficients de masse de relaxation (en g/cm²) dans de la terre. A(z=0) = 100 Bq/kg

# FIG. 2

## FIG. 3a

## FIG. 3b

# FIG. 4

EP 2 875 386 B1

FIG. 5a

FIG. 5b

## FIG. 6a

**FIG. 6b**

FIG. 6c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003111612 A

- US 6518579 B

**Littérature non-brevet citée dans la description**

- **WEIYI WANG et al.** *IEEE Transactions on Nuclear Science,* Avril 2012, vol. 59 (2

- **GERING F. et al.** In situ gamma spectrometry several years after deposition of radiocesium. II. Peak to valleay method. *Radia. EnvironBiophys,* 1998, vol. 37, 283-291